# EUROPÄISCHE PATENTSCHRIFT

(11) **EP 2 933 354 B1**
(45) Veröffentlichungstag und Bekanntmachung des Hinweises auf die Patenterteilung: **08.12.2021**
(21) Anmeldenummer: 15161571.3
(22) Anmeldetag: 30.03.2015
(51) Int. Cl.: C23D 5/00, A47J 39/00, C23C 28/04, B05D 7/00, B05D 1/00

(54) **HAUSHALTGERÄTEBAUEINRICHTUNG**
HOUSEHOLD DEVICE CONSTRUCTION DEVICE
DISPOSITIF DE CONSTRUCTION D'APPAREILS MÉNAGERS

(30) Priorität: 14.04.2014 DE 102014105257
(43) Veröffentlichungstag der Anmeldung: 21.10.2015
(73) Patentinhaber: Miele & Cie. KG, 33332 Gütersloh (DE)
(72) Erfinder: Sillmen, Ulrich, 33332 Gütersloh (DE); Krümpelmann, Thomas, 33332 Gütersloh (DE); Luthe, Winfried, 33335 Gütersloh (DE); Breford, Ernst-Jürgen, 49324 Melle (DE)

(56) Entgegenhaltungen:
- EP-A2- 0 353 060
- DE-A1-102008 009 504
- US-A- 3 911 177
- None

## Beschreibung

Die vorliegende Erfindung betrifft eine Haushaltgerätebaueinrichtung nach dem Oberbegriff des Anspruchs 1.

Eine Haushaltgerätebaueinrichtung und ein Verfahren zur Herstellung einer solchen Haushaltgerätebaueinrichtung sind aus der DE 10 2008 009 504 A1 bekannt.

Viele Hausgeräte, wie z. B. Herde und Backöfen, weisen oft metallische Bauteile mit einer Oberflächenbeschichtung auf. Dabei muss die Beschichtung in der Regel verschiedenste Aufgaben übernehmen. Beispielsweise sollen die beschichteten Teile vor Korrosion geschützt werden, die Oberflächen sollen leicht zu reinigen sein und nicht zuletzt soll das Hausgerät auch eine ansprechende Optik und Haptik bekommen. Zudem muss die Beschichtung auch entsprechend den Einsatzbedingungen kratz- und stoßfest sein. Eine häufig verwendete Beschichtung ist z. B. eine Lackierung.

In einigen Bereichen werden dabei sehr hohe und spezifische Anforderungen an die Beschichtung gestellt, wie z. B. im Garraum eines Backofens oder bei einem Backblech. Dort soll die Beschichtung neben den bereits erwähnten Aufgaben auch ein Anhaften von den zuzubereitenden Speisen und von Fett- und Ölspritzern verhindern. Zugleich muss die Beschichtung aber auch den hohen Temperaturen im Garraum widerstehen können. So treten bei einem Backofen mit Pyrolyse-Reinigungsfunktion zeitweise Temperaturen bis zu 500 °C auf. Häufig werden Garraumwandungen und Backbleche daher mit einer Beschichtung aus Email versehen, welche eine entsprechend hohe Hitzebeständigkeit aufweist.

Bei modernen Hausgeräten soll trotz einer Beschichtung häufig das Erscheinungsbild des verwendeten Materials erhalten bleiben. Das Material soll oft auch ganz bewusst die Optik des Hausgerätes mitbestimmen. Besonders bei Hausgeräten mit Bereichen aus Edelstahl oder anderen hochwertigen Metalllegierungen wird daher häufig eine transparente Beschichtung angestrebt. Eine solche Beschichtung ist jedoch aufgrund der oben erwähnten Anforderungen und der gewünschten Transparenz nicht ohne weiteres möglich und bringt oft einen erheblichen Kostenaufwand mit sich.

Beispielsweise ist das Aufbringen einer transparenten Email-Beschichtung auf Edelstahl sehr problematisch, wenn das Erscheinungsbild des Edelstahls erhalten werden soll. In der Regel verfärbt sich die Edelstahloberfläche beim Anfahren der Schmelztemperatur für das Email. Dabei bilden sich unter den hohen Schmelztemperaturen durch Oxidationsprozesse unerwünschte Anlauffarben und der farblos transparente Eindruck der Beschichtung geht verloren. Zwar könnte dem Anlaufen durch eine spezielle Schutzgasatmosphäre während des Schmelzvorgangs entgegengewirkt werden. Allerdings würden sich dadurch die Haftung zwischen Email und Metall deutlich verringern und der Produktions- und Kostenaufwand erheblich erhöhen.

Ein weiteres Problem ist, dass der Edelstahl in der Regel zur Haftverbesserung vor dem Aufbringen einer Email-Beschichtung vorbehandelt werden muss. Dazu kann der Edelstahl aufgeraut bzw. gebürstet werden. Dadurch wird das Erscheinungsbild der Oberfläche unvorteilhaft beeinflusst. Eine andere Möglichkeit zur Haftverbesserung stellen sog. Haftoxide dar, wie z. B. Eisen- oder Kobaltoxid. Solche Haftvermittler sind meist farbig und zerstören dadurch ebenfalls den optischen Eindruck des Edelstahls.

Es ist daher die Aufgabe der vorliegenden Erfindung, eine verbesserte Beschichtung für Hausgeräte und insbesondere Gargeräte zur Verfügung zu stellen.

Diese Aufgabe wird gelöst durch eine Haushaltgerätebaueinrichtung mit den Merkmalen des Anspruchs 1. Bevorzugte Merkmale sind Gegenstand der Unteransprüche. Weitere Vorteile und Merkmale ergeben sich aus der allgemeinen Beschreibung der Erfindung und der Beschreibung der Ausführungsbeispiele.

Die erfindungsgemäße Haushaltgerätebaueinrichtung ist für ein Haushaltgerät und insbesondere für ein Gargerät vorgesehen und geeignet. Die Haushaltgerätebaueinrichtung umfasst wenigstens ein Substrat mit wenigstens einem Oberflächenbereich. Der Oberflächenbereich ist wenigstens teilweise beschichtet. Dabei weist der Oberflächenbereich wenigstens eine erste im Wesentlichen gasdiffusionsdichte und im Wesentlichen transparente Beschichtung auf. Zudem weist der Oberflächenbereich wenigstens eine zweite Beschichtung auf. Die zweite Beschichtung ist wenigstens bereichsweise über der ersten Beschichtung aufgebracht. Sie wird durch ein Beschichtungsverfahren aufgetragen ist, welches wenigstens ein thermisches Schmelzverfahren als Verfahrensschritt aufweist. Insbesondere wird bei dem Schmelzverfahren ein Glasmaterial und/oder Keramikmaterial aufgeschmolzen. Es kann ein glasig-silicatisches Material aufgeschmolzen werden. Es ist möglich, dass bei dem Schmelzverfahren Temperaturen von mehr als 200°C oder von mehr als 350°C oder mehr auftreten.

Die zweite Beschichtung ist wenigstens teilweise eine Emailbeschichtung.

Möglich ist auch eine emailartige und/oder keramikartige Beschichtung. Dabei können auf ein aufgeschmolzenes Grundemail eine oder auch mehrere weitere Deckschichten aufgebracht sein. Möglich ist ein farbiges, deckendes Email. Das Email kann auch farblos sein. Vorzugsweise ist das Email transparent.

Die erfindungsgemäße Haushaltgerätebaueinrichtung hat viele Vorteile. Ein erheblicher Vorteil ist, dass wenigstens zwei Beschichtungen vorgesehen sind, wobei die erste Beschichtung gasdiffusionsdicht und transparent ist. Dadurch gelangen beim Aufbringen der zweiten Beschichtung kein Sauerstoff und andere reaktive Gase an das Substrat. Unerwünschten Veränderungen der Oberflächeneigenschaften des Substrats wird so zuverlässig entgegengewirkt. Beispielsweise kann die Haushaltgerätebaueinrichtung eine zweite Beschichtung aufweisen, welche aufgeschmolzen wurde. Trotz der hohen Temperaturen während des Schmelzvorgangs zeigt die Haushaltgerätebaueinrichtung aufgrund der gasdiffusionsdichten ersten Beschichtung keine unerwünschten Anlaufverfärbungen.

Insbesondere ist die erste Beschichtung dazu geeignet und ausgebildet, Sauerstoff und andere in der Luft üblicherweise vorkommende Gase vom Substrat abzuhalten, sodass ein Schutz vor Oxidation und Reduktion oder sonstiger Korrosion durch Luftsauerstoff gewährleistet ist. Die erste Beschichtung ist insbesondere diffusionsdicht für Luftsauerstoff auch bei höheren Temperaturen, wie sie z. B. beim Aufschmelzen einer Emailbeschichtung auftreten. Vorzugsweise ist auch die zweite Beschichtung im Wesentlichen gasdiffusionsdicht. Insbesondere sind die erste und/oder die zweite Beschichtung dazu geeignet und ausgebildet, das Substrat vor Korrosion und/oder thermischer Korrosion und/oder Anlaufen zu schützen.

Die erste Beschichtung und die zweite Beschichtung sind insbesondere verschiedene Beschichtungstypen. Die erste Beschichtung und die zweite Beschichtung sind insbesondere mittels verschiedenen Beschichtungsmethoden und Beschichtungstechniken aufgetragen. Die erste Beschichtung und die zweite Beschichtung sind insbesondere nicht gleichartig. Dabei können die erste und/oder die zweite Beschichtung eine oder zwei oder mehrere Schichten aufweisen bzw. in mehreren Schichten aufgebracht sein. Auch die zweite Beschichtung ist vorzugsweise im Wesentlichen transparent. Vorzugsweise sind die erste und/oder die zweite Beschichtung farblos.

Die Haushaltgerätebaueinrichtung kann ein oder mehrere Bauteile umfassen, wie z. B. ein Gehäuseteil oder eine Garraumwandung mit Gargutträgern, Verschraubungen oder dergleichen. Möglich sind auch beliebige andere Bauteile eines Hausgerätes. Möglich sind beispielsweise Teleskopauszüge, Backbleche, Grillroste, Blenden und/oder Scharniere. Vorzugsweise ist die Haushaltgerätebaueinrichtung für ein Gargerät vorgesehen, wie z. B. ein Elektro- oder Gasbackofen, Dampfgarer, Kombidampfgarer, eine Mikrowelle mit oder ohne Grill und/oder eine Kocheinrichtung. Möglich sind aber auch andere Hausgeräte, wie beispielsweise eine Waschmaschine, ein Trockner oder ein Bügeleisen oder auch gewerbliche Küchengeräte. Dabei kann das Substrat wenigstens ein Bereich eines Bauteils sein, welcher dafür vorgesehen und ausgebildet ist, beim Betrieb des Gargerätes auf wenigstens 100 °C erhitzt zu werden. Möglich sind auch 200 °C oder 400°C oder 500 °C oder mehr.

In einer besonders bevorzugten Weiterbildung ist die erste Beschichtung durch ein Beschichtungsverfahren aufgetragen, welches wenigstens eine Gasphasenabscheidung als Verfahrensschritt aufweist. Möglich ist, dass die erste Beschichtung und/oder ein Ausgangsmaterial der Beschichtung während des Beschichtungsprozesses wenigstens zeitweise in einem gas- oder plasmaförmigen Zustand vorliegt. Insbesondere wird dabei ein Precursor verdampft und die gas- oder plasmaförmige Phase auf das Substrat aufgetragen bzw. aufgedampft. Der Precursor ist vorzugsweise eine im Wesentlichen organische Siliziumverbindung, z. B. HMDSO oder ein anderes geeignetes Material. Das Auftragen geschieht vorzugsweise unter Vakuum- und/oder Inertgas- und/oder Plasmabedingungen.

Besonders bevorzugt ist das Substrat durch chemische Gasphasenabscheidung bzw. durch ein CVD-Verfahren (engl. chemical vapour deposition) beschichtet werden. Möglich ist auch eine Beschichtung durch physikalische Gasphasenabscheidung bzw. durch ein PVD-Verfahren (engl. physical vapour deposition).

Es ist auch bevorzugt, dass die Beschichtung durch plasmaunterstützte chemische Gasphasenabscheidung und z B. ein PECVD-Verfahren (engl. plasma-enhanced chemical vapour deposition) auf das Substrat aufgetragen ist. Möglich ist auch ein PACVD-Verfahren (engl. plasma-assisted chemical vapour deposition) oder dergleichen. Die plasmaunterstützte Beschichtung erfolgt unter Atmosphärendruck oder im Vakuum.

Eine solche Beschichtung hat viele Vorteile, wie z. B. eine vergleichsweise hohe Schichtqualität, insbesondere in Hinblick auf die Gasdiffusionsdichtigkeit und die chemische Beständigkeit. Vorteilhaft ist zudem, dass auch extrem dünne Schichten herstellbar sind, z. B. von Monolagen über Nano- bis Mikrometer dicke Schichten. Ein weiterer Vorteil ist die Möglichkeit, Schichten herzustellen, die die Substratkontur nachbilden und diese dabei im Wesentlichen nicht einebnen. Es können auch Gradientenschichten aufgetragen sein.

Vorzugsweise weist die erste Beschichtung wenigstens bereichsweise eine Schichtdicke zwischen einem Nanometer und 10000 Nanometer auf. Insbesondere ist eine Schichtdicke zwischen 5 nm und 5000 nm vorgesehen. Bevorzugt sind sehr dünne und insbesondere wenige Nanometer dicke Beschichtungen. Möglich sind auch auch dickere Beschichtungen.

Es ist möglich, dass die erste Beschichtung eine mit zunehmender Temperatur des Substrats abnehmende Druckspannung aufweist. Es kann sein, dass das Substrat wenigstens zeitweise während des Auftragens der ersten Beschichtung erwärmt wird. Dabei wird vorzugsweise so viel Wärmeenergie zugeführt, dass das Substrat während des Beschichtungsprozesses so gedehnt wird, wie es bei einem Aufschmelzen der zweiten Beschichtung ausgedehnt werden würde. Das Substrat kann auch soweit während des Beschichtungsprozesses gedehnt werden, wie es bei einem späteren Einsatz im Haushaltgerät durch Zufuhr von Wärmeenergie ausgedehnt werden würde. Daran ist vorteilhaft, dass dadurch einer Rissbildung beim Erhitzen im Betrieb oder während der Auftragung einer Email-Schicht entgegen gewirkt wird.

Es ist bevorzugt, dass die erste Beschichtung dazu geeignet und ausgebildet ist, als Haftvermittler für die zweite Beschichtung zu dienen. Der Haftvermittler ist bevorzugt dazu vorgesehen, dass die zweite Beschichtung zuverlässig und entsprechend dauerhaft auf dem Substrat verbleibt. Das ist vorteilhaft, wenn das Substrat beispielsweise ein Edelstahlmaterial und die zweite Beschichtung z. B. eine Email-Beschichtung ist. Somit ist kein mechanisches oder chemisches Aufrauen und es sind auch keine Haftoxide nötig. Dadurch werden der Herstellungsaufwand reduziert und der Einsatz von umweltbelastenden Stoffen vermieden. Besonders vorteilhaft ist auch, dass bei einer transparenten Email-Beschichtung die Oberfläche des Substrats optisch unverändert sichtbar bleibt.

Vorzugsweise weist die zweite Beschichtung wenigstens bereichsweise eine Schichtdicke zwischen 10 Mikrometer und 500 Mikrometer auf. Insbesondere beträgt die Schichtdicke zwischen 50 µm und 200 µm. Möglich ist aber auch eine dünnere oder dickere Schichtdicke der zweiten Beschichtung. Besonders bevorzugt beträgt die Schichtdicke der zweiten Beschichtung ein Vielfaches der Schichtdicke der ersten Beschichtung. Die Schichtdicke der zweiten Beschichtung beträgt beispielsweise mehr als ein zehnfaches und insbesondere ein Hundertfaches der Schichtdicke der ersten Beschichtung.

Die zweite Beschichtung ist insbesondere im Wesentlichen transparent. Die zweite Beschichtung ist auch bevorzugt im Wesentlichen farblos. Dabei ist die zweite Beschichtung so ausgebildet, dass die Beschaffenheit der Oberfläche des Substrats durch die Beschichtungen hindurch sichtbar ist. Möglich ist aber auch eine farbige und/oder deckende zweite Beschichtung.

Die erste Beschichtung weist wenigstens eine im Wesentlichen anorganische Verbindung und/oder überwiegend anorganische und insbesondere wenigstens eine Siliziumverbindung auf. Dabei kann die erste Beschichtung aus wenigstens einem überwiegend organischen Ausgangsmaterial bzw. Precursor gefertigt sein, wobei der Precursor während des Beschichtungsprozesses in ein überwiegend anorganisches Material umgesetzt wird. Insbesondere ist die erste Beschichtung als eine glasartige und/oder keramikartige Beschichtung ausgebildet, wie z. B. eine Siliziumoxid- (SiOx) oder (SiOxCyHz) Beschichtung. Die zweite Beschichtung kann auch eine überwiegend anorganische Verbindung und insbesondere wenigstens eine Siliziumverbindung enthalten.

In einer bevorzugten Ausgestaltung ist die erste Beschichtung für in Garräumen von Gargeräten auftretenden Temperaturen wärmestabil. Bevorzugt ist auch die zweite Beschichtung für in Garräumen von Gargeräten auftretenden Temperaturen wärmestabil. Dabei können die erste und/oder die zweite Beschichtung dafür vorgesehen und ausgebildet sein, beim Betrieb des Gargerätes auf 100 °C oder mehr erhitzt zu werden. Möglich sind auch 200 °C oder 400°C oder 500 °C oder mehr. Vorzugsweise sind die erste und/oder die zweite Beschichtung auch für einen Einsatz in Garräumen mit einer Pyrolyse-Reinigungsfunktion geeignet und ausgebildet.

Insbesondere besteht das Substrat wenigstens teilweise aus wenigstens einem metallischen Material. Möglich ist beispielsweise ein legierter oder hochlegierter Stahl. Vorzugsweise besteht das Substrat aus einem Edelstahlmaterial. Möglich sind auch eine Titanlegierung und/oder Eloxal und/oder Stahl. Möglich sind auch ein bimetallischer Werkstoff und/oder ein Verbundmaterial oder dergleichen. Das Substrat ist dabei insbesondere ein Bauteil der Haushaltgerätebaueinrichtung, wie z. B. eine Garraumwandung oder ein Backblech oder ein Gehäuseteil oder ein Garraumzubehör.

In einer vorteilhaften Weiterbildung enthält die erste Beschichtung wenigstens einen Hilfsstoff, welcher mit wenigstens einem anderen Hilfsstoff der zweiten Beschichtung zu wenigstens einem Farbstoff reagiert. Z. B. kann eine chemische Reaktion zugrunde liegen. Es ist auch möglich, dass der Hilfsstoff der ersten Beschichtung mit dem anderen Hilfsstoff der zweiten Beschichtung in eine Wechselwirkung tritt, durch welche eine Farbwahrnehmung erzeugbar ist. Dabei kann der jeweiligen Beschichtung ein spezieller Hilfsstoff hinzugefügt werden. Möglich ist auch, dass der Hilfsstoff bereits in der jeweiligen Beschichtung vorgesehen ist, z. B. als Bestandteil eines Emailpulvers.

Möglich ist dabei ein physikalischer Effekt, wie z. B. Interferenzfarben an der Grenzschicht zwischen den Beschichtungen. Es können auch Bereiche auf dem Substrat vorgesehen sein, die sich durch jeweils unterschiedliche Hilfsstoffe der ersten und/oder zweiten Beschichtung unterscheiden. Dadurch können sich die Bereiche in ihren Farbeffekten unterscheiden. Möglich ist eine gezielte farbliche Gestaltung von Oberflächen durch die Verwendung von verschiedenen Beschichtungen mit entsprechenden Hilfsstoffen, welche in Wechselwirkung treten. Der Oberflächenbereich kann zweifarbige oder mehrfarbige Grafiken aufweisen.

Es ist möglich, dass das Substrat wenigstens einen Oberflächenbereich aufweist, welcher nur die zweite Beschichtung aufweist. Vorzugsweise weist dieser Oberflächenbereich eine bestimmte Kontur auf, sodass eine gezielte, gestalterische Erscheinung erzielbar ist. Insbesondere wird durch das Auslassen der ersten Beschichtung eine bestimmte Farbe und/oder Oberflächenstruktur erreicht. Dabei kann beispielsweise durch eine mechanische Aufrauung als Haftvermittlung und/oder eine chemische Haftvermittlung ein Farbeffekt erzielt werden, welcher durch die insbesondere transparente zweite Beschichtung hindurch sichtbar ist.

Insbesondere ist in dem Oberflächenbereich, welcher nur die zweite Beschichtung aufweist, der Hilfsstoff ausgespart, sodass der Farbstoff bzw. die Farbwahrnehmung hier nicht auftritt. Es kann dazu ein anderer Haftvermittler zum Einsatz kommen. Möglich ist eine chemische und/oder mechanische Vorbereitung des Substrats, z. B. durch Bürsten. Es ist auch möglich, dass das Substrat Oberflächenbereiche aufweist, die sich in ihrer ersten Beschichtung und/oder in den Hilfsstoffen unterscheiden.

Das erfindungsgemäße Verfahren dient zur Herstellung einer Haushaltgerätebaueinrichtung, insbesondere für ein Gargerät. Die Haushaltgerätebaueinrichtung umfasst wenigstens ein Substrat mit wenigstens einem wenigstens teilweise beschichteten Oberflächenbereich. Dabei wird in dem Oberflächenbereich wenigstens eine erste im Wesentlichen gasdiffusionsdichte und im Wesentlichen transparente Beschichtung aufgetragen. Anschließend wird wenigstens bereichsweise wenigstens eine über der ersten Beschichtung liegende zweite Beschichtung aufgetragen.

Dabei wird die erste Beschichtung durch wenigstens ein wenigstens eine Gasphasenabscheidung umfassendes Beschichtungsverfahren aufgetragen. Die zweite Beschichtung wird durch wenigstens ein Schmelzverfahren aufgetragen. Insbesondere wird bei dem Schmelzverfahren eine transparente Email-Beschichtung aufgetragen. Es ist möglich, dass Oberflächenbereiche mit der zweiten Beschichtung beschichtet werden, in denen zuvor gezielt Aussparungen beim Auftragen der ersten Beschichtung gemacht wurden.

Das erfindungsgemäße Verfahren hat viele Vorteile. Besonders vorteilhaft ist die gasdiffusionsdichte erste Beschichtung. Das ermöglicht beispielsweise das Aufschmelzen der zweiten Beschichtung, ohne das Sauerstoff an das Substrat gelangt und es zum Anlaufen kommt. Besonders bei transparenten Beschichtungen kann so der optische Eindruck der Oberfläche des Substrats unverändert wahrgenommen werden.

Das Verfahren eignet sich insbesondere zur Herstellung der zuvor beschriebenen Haushaltgerätebaueinrichtung oder einer der entsprechenden Weiterbildungen.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine schematische Darstellung eines Gargerätes mit einer erfindungsgemäßen Haushaltgerätebaueinrichtung in perspektivischer Ansicht;
- Figur 2: eine stark schematisierte Darstellung einer Haushaltgerätebaueinrichtung in einer Seitenansicht;
- Figur 3: eine stark schematisierte Darstellung eines Teils einer Haushaltgerätebaueinrichtung in einer geschnittenen Seitenansicht;
- Figur 4: eine weitere Haushaltgerätebaueinrichtung in einer geschnittenen Seitenansicht;
- Figur 5: eine andere Haushaltgerätebaueinrichtung in einer geschnittenen Seitenansicht;
- Figur 6: noch eine andere Haushaltgerätebaueinrichtung in einer geschnittenen Seitenansicht; und
- Figur 7: eine stark schematisierte Darstellung eines Teils einer Haushaltgerätebaueinrichtung in einer Draufsicht.

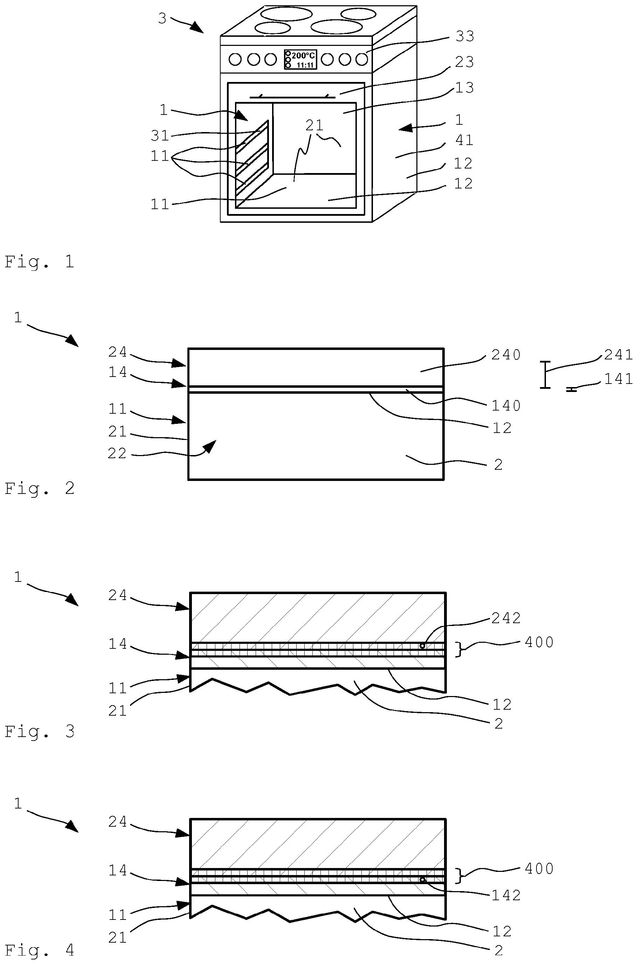

Die Figur 1 zeigt ein Gargerät 3 mit einer erfindungsgemäßen Haushaltgerätebaueinrichtung 1. Das Gargerät 3 weist einen beheizbaren und mit einer Tür verschließbaren Garraum 13 auf. Das Gargerät 3 kann über eine Bedieneinrichtung 33 von einem Benutzer bedient werden. Zur Beheizung des Garraums 13 können verschiedene Heizquellen vorgesehen sein, wie z. B. eine Ober- und Unterhitzeheizquelle, eine Grillheizquelle, eine Umluftheizquelle, eine Dampfheizquelle oder eine Mikrowellenheizquelle oder weitere Heizquellen.

Die Haushaltgerätebaueinrichtung 1 umfasst hier als beispielhafte Bauteile 11 eine Wandung 21 des Garraumes 13 sowie eine Gargutträgeraufnahme 31. Als weiteres beispielhaftes Bauteil 11 ist hier das Gehäuse 41 des Gargeräts 3 gezeigt. Daneben können noch weitere Haushaltgerätebaueinrichtungen 1 oder auch andere, hier nicht bezeichnete Bauteile 11 vorgesehen sein. Beispielsweise können auch Zubehörteile, wie z. B. ein Backblech oder dergleichen, als Haushaltgerätebaueinrichtung ausgebildet sein.

Die Wandung 21 und das Gehäuse 41 sind hier aus einem Edelstahlmaterial 22 gefertigt. Die Wandung 21 weist an einem zum Garraum 13 gerichteten Oberflächenbereich 12 eine hier nicht dargestellte erste Beschichtung 14 und eine zweite Beschichtung 24 auf. Das Gehäuse 41 weist ebenfalls eine hier nicht gezeigte erste Beschichtung 14 und eine zweite Beschichtung 24 auf, welche insbesondere an einer Außenseite aufgetragen ist.

Die Beschichtungen 14, 24 wurden nach dem erfindungsgemäßen Verfahren zur Herstellung einer Haushaltgerätebaueinrichtung 1 aufgetragen. Die Beschichtungen 14, 24 können auch für andere Bauteile 11 vorgesehen sein, wie beispielsweise Teleskopauszüge, Grillroste, Frontrahmen für den Garraum, Teile der Gerätefront, wie beispielsweise die Bedienblende oder Gehäuseverkleidungen.

Um die charakteristische Oberfläche des Edelstahlmaterials 22 als gestalterisches Element einzusetzen, wurden die Bauteile 11 hier transparent und farblos beschichtet. Die zweite Beschichtung 24 ist als eine transparente Emailbeschichtung 240 ausgebildet. Die Emailbeschichtung 240 kann aber auch farbig bzw. deckend ausgestaltet sein. Eine solche Emailbeschichtung 240 bietet eine sehr vorteilhafte mechanische, thermische und chemische Beständigkeit sowie einen sehr zuverlässigen Korrosionsschutz. Unterhalb der zweiten Beschichtung 24 wurde zuvor eine erste Beschichtung 14 aufgetragen. Die erste Beschichtung 14 ist ebenfalls transparent und farblos und wurde mittels Gasphasenabscheidung aufgetragen.

Die erste Beschichtung 14 übernimmt hier im Wesentlichen zwei Funktionen. Erstens dient die erste Beschichtung 14 als ein Haftvermittler 140, sodass eine optimale Haftung der Emailbeschichtung 240 auf dem Edelstahlmaterial 22 gewährleistet wird. In verschiedenen Versuchen konnte gezeigt werden, dass die Haftung der Emailbeschichtung 240 auf Edelstahlmaterialien 22 in Bereichen mit einer ersten Beschichtung 14 deutlich besser ist als ohne eine erste Beschichtung 14. Daran ist besonders vorteilhaft, dass weder ein mechanisches Aufrauen der Edelstahlfläche noch ein Einsatz chemischer Haftvermittler bzw. Haftoxide notwendig ist, was in der Regel zu unerwünschten optischen Veränderungen der Edelstahloberfläche führt. Dadurch kommt die Oberfläche des Edelstahlmaterials 22 voll zur Geltung.

Zweitens wirkt die erste Beschichtung 14 hier als eine gasdichte Diffusionsbarriere, welche Verfärbungen der Edelstahloberfläche durch Oxidation oder Reduktion verhindert. Das hat den Vorteil, dass beim Aufschmelzen der Emailbeschichtung 240 keine optisch störend wirkenden Anlaufverfärbungen entstehen. Das hier vorgestellte Verfahren ermöglicht somit eine farblose, transparente Emailbeschichtung 240 auf Edelstahloberflächen 22, ohne dass der typische optische Eindruck von Edelstahl unvorteilhaft verändert wird. Somit können die technischen und praktischen Vorteile einer Emailbeschichtung 240 zusammen mit den Designvorteilen von Edelstahl 22 voll genutzt werden.

In der Figur 2 ist ein Bauteil 11 einer Haushaltgerätebaueinrichtung 1 gezeigt, welches beispielhaft als eine Wandung 21 aus einem Edelstahlmaterial 22 ausgebildet ist. Die Wandung 21 2 wurde in einem Oberflächenbereich 12 mit einer ersten Beschichtung 14 und einer zweiten Beschichtung 24 beschichtet. Die zweite Beschichtung 24 ist eine Emailbeschichtung 240. Zwischen der Emailbeschichtung 240 und dem Substrat 2 befindet sich die erste Beschichtung 14, welche durch eine Gasphasenabscheidung aufgetragen wurde und als Haftvermittler 140 vorgesehen ist.

Bei der Herstellung der Beschichtungen 14, 24 wurde der Oberflächenbereich 12 zunächst grob gereinigt, zum Beispiel durch nass-chemisches Entfetten. Anschließend wurde fein gereinigt, zum Beispiel in einer Vakuumkammer unter Einwirkung eines Plasmas beispielsweise aus Argon, Stickstoff, Wasserstoff oder Halogenverbindungen. Anschließend wurde die als Diffusionsbarriere ausgebildete erste Beschichtung 14 aufgebracht. Die erste Beschichtung 14 verhindert insbesondere, dass bei Raumtemperatur und auch bei erhöhter Temperatur beispielsweise Sauerstoff oder Wasserdampf zum Edelstahlmaterial 22 gelangen und dieses durch Oxidation oder Reduktion verfärben.

Dazu ist die erste Beschichtung 14 als eine überwiegend anorganische und glas- oder keramikartige Schicht mit entsprechend wenig Kohlenstoff ausgebildet. Diese Schicht wurde durch Gasphasenabscheidung auf das Edelstahlmaterial 22 aufgedampft, z. B. mit PVD, CVD oder PE-CVD. Das geschieht beispielsweise im Vakuum oder bei Atmosphärendruck. Vorteilhaft ist, dass beim Abscheiden der ersten Beschichtung 14 die Temperatur des Edelstahlmaterials 22 so niedrig bleibt, dass es zu keinen Anlauffarben kommt. Beispielsweise wird die erste Beschichtung 14 aus einem siliziumorganischen Precursor, wie z. B. HDMSO hergestellt und ist eine SiOxCyHz-Beschichtung. Die Schichtdicke beträgt dabei beispielsweise 5 Nanometer bis 5 Mikrometer.

Es kann vorgesehen sein, dass während des Beschichtens auf der Fertigungsanlage im Wechsel noch weitere Schichten mit anderen Funktionen abgeschieden werden. Das geschieht hauptsächlich dadurch, dass der Precursor bzw. das Prozessgas, aus dem die Schichtabscheidung gespeist wird, gewechselt wird. Die Schichtdicken bleiben i.d.R. mit diesen Dünnschichttechniken im Bereich von einigen 10 nm bis einigen Mikrometern. Die Schichtdicke ist etwa proportional zur Prozesszeit. Eine Erhöhung der Schichtdicke von 1 auf 10 Mikrometer etwa wäre mit einer 10mal längeren Beschichtungsdauer verknüpft, welche in einigen Fällen oft nicht mehr wirtschaftlich wäre. Die erste Beschichtung bietet eine vorteilhafte, Gasphasenabgeschiedene Barriere- und Haftvermittlungsschicht, welche eine sehr gute Haftung am Substrat und sehr gute Barriereeigenschaften aufweist, z. B. gegen Sauerstoff.

Nach dem Aufbringen der ersten Beschichtung 14 folgt in einem zweiten Schritt das Auftragen der zweiten Beschichtung 24. Dazu wird zunächst fein gemahlenes Emailpulver aufgebracht, z. B. durch Elektrotauchemaillierung, Nass-Sprühen, elektrostatisches Pulversprühen oder dergleichen. Das Emailpulver wird zur zweiten Beschichtung 24 aufgeschmolzen und verbindet sich mit der ersten Beschichtung 14. Während des Aufschmelzens verhindert die erste Beschichtung 14 eine Verfärbung des Edelstahlmaterials 22 und sorgt für eine optimale Haftung des Emails. Je nach Zusammensetzung der gas- oder keramikartigen Beschichtung 24 ist diese in der Regel mindestens bis zu Temperaturen von 500°C oder mehr, bei quarzglasartigen Beschichtungen auch höher, stabil. Die Emailbeschichtung 240 ist typischerweise 50 bis 200 Mikrometer dick. Die Schichtdicke 241 der Emailbeschichtung 240 ist somit um ein vielfaches größer als die Schichtdicke 141 der ersten Beschichtung 140.

Die Figur 3 zeigt ein Bauteil 11 einer Haushaltgerätebaueinrichtung 1, welches in einem Oberflächenbereich 12 mit einer ersten und einer zweiten Beschichtung 14, 24 beschichtet ist. Die erste Beschichtung 14 ist hier als Haftvermittler 140 und als Gasdiffusionsbarriere vorgesehen. Darüber ist die zweite Beschichtung 24 als Emailbeschichtung 240 ausgebildet.

Die Emailbeschichtung 240 enthält hier einen Hilfsstoff 242, der mit Verbindungen der ersten Beschichtung 14 chemisch reagiert und in der Grenzfläche der ersten Beschichtung 14 zur zweiten Beschichtung 24 durch Mischoxidbildung farbig wird. Dadurch bildet sich eine Farbschicht 400, über der das transparente Email liegt. Der Hilfsstoff 242 ist hier beispielhaft mit einem Kreis angedeutet. Vorzugsweise ist der Hilfsstoff 242 in der Emailbeschichtung 240 verteilt. Der Hilfsstoff 242 wird insbesondere zusammen mit dem Emailpulver vor dem Aufschmelzen aufgebracht.

Die Figur 4 zeigt ein ähnlich beschichtetes Bauteil 11 wie die Figur 3a. Im Unterschied zur Figur 3a weist die erste Beschichtung 14 hier einen Hilfsstoff 142 auf, welche im Bereich der Grenzfläche zur zweiten Beschichtung 24 mit Verbindungen der Emailbeschichtung 240 zu einer Farbschicht 400 reagiert. Der Hilfsstoff 142 ist hier ebenfalls beispielhaft mit einem Kreis angedeutet. Vorzugsweise ist der Hilfsstoff 142 in der ersten Beschichtung verteilt. Der Hilfsstoff 142 wird insbesondere zusammen mit dem Precursor verdampft und aufgebracht. Der Precursor kann auch selbst als Hilfsstoff 142 vorgesehen sein.

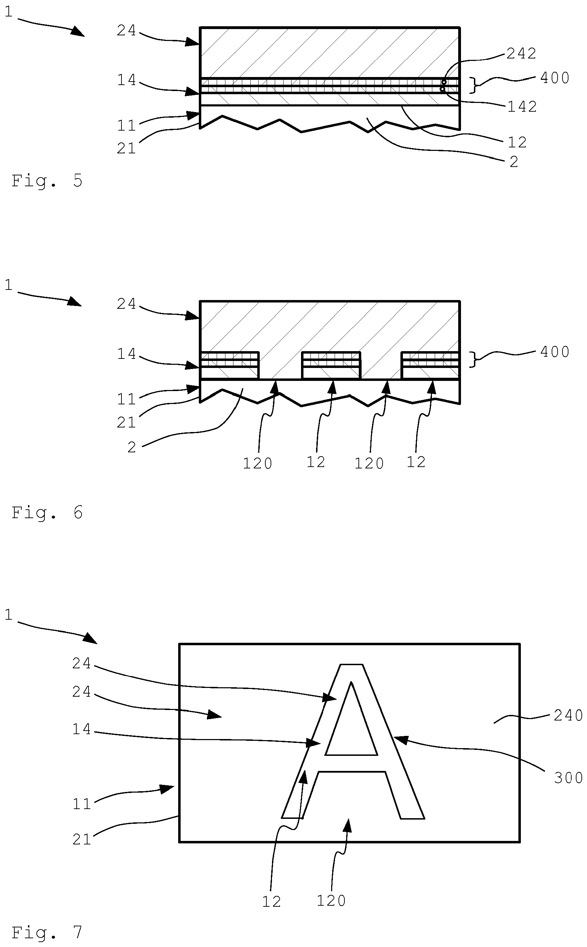

In der Figur 5 ist ein ähnliches Bauteil 11 wie in den beiden zuvor beschriebenen Figuren gezeigt, wobei hier die erste Beschichtung 14 und die zweite Beschichtung 24 jeweils einen Hilfsstoff 142, 242 aufweisen. Die Hilfsstoffe reagieren hier gemeinsam im Bereich der Grenzschicht beider Beschichtungen 14, 24 zu einer Farbschicht 400.

Das Erzeugen einer Farbschicht 400 im Grenzbereich der Beschichtungen 14, 24 hat viele Vorteile. Die auf diese Weise erzeugbaren Farben sind sehr intensiv, beispielsweise lassen sich dunkle Töne wie anthrazit oder dergleichen erzeugen. Möglich sind aber auch hellere Töne wie ein übliches Edelstahlmaterial 22. Besonders vorteilhaft ist auch, dass durch das darüber liegende transparente Email sich ein spezieller Tiefeneffekt ergibt. Das beschichtete Bauteil 11 scheint durch die eingelagerten Strukturen an der Grenzfläche farbig transparent.

Die Figur 6 zeigt ein Bauteil 11 einer Haushaltgeräteeinrichtung 1 mit einer Emailbeschichtung 240. Unterhalb der Emailbeschichtung 240 ist eine erste Beschichtung 14 als Haftvermittler und Gasdiffusionsbarriere vorgesehen. Die erste Beschichtung 14 wurde hier nur in einem ersten Oberflächenbereich 12 aufgetragen und ist in einem zweiten Oberflächenbereich 120 ausgespart. Dadurch bildet sich in dem zweiten Oberflächenbereich 120 ohne erste Beschichtung 14 keine Farbschicht 400 aus. Im ersten Oberflächenbereich 12 mit erster Beschichtung 14 kommt es zur Farbreaktion und zur Ausbildung der Farbschicht 400.

Die entsprechenden Reaktionen finden dabei vorzugsweise nur in unmittelbarer Nähe der Grenzfläche zwischen den Beschichtungen 14, 24 statt. Diffusionswege der Hilfsstoffe 142, 242 bleiben insbesondere auf einer mikroskopischen Skala. Deshalb sieht der Übergang von einem Bereich mit zu einem ohne erste Beschichtung 14 mit dem Auge betrachtet extrem scharf aus. So lassen sich z. B. Texte oder andere mindestens 2-farbige Grafiken drucken. Die gesamte Grafik liegt dabei zuverlässig versiegelt unter der transparenten Emailbeschichtung 240.

In der Figur 7 ist beispielhaft ein Bauteil 11 mit einer Grafik aufgezeigt. Die Grafik ist hier als Buchstabe "A" 300 ausgebildet. Im Oberflächenbereich 120 des Buchstabens 300 wurden die erste und die zweite Beschichtung 14, 24 aufgebracht. Durch einen Hilfsstoff 242 in der zweiten Beschichtung 24 kam es an der Grenzfläche zwischen den Beschichtungen 14, 24 zur Ausbildung einer Farbschicht 400. Im Oberflächenbereich 12 außerhalb des Buchstabens 300 wurde die erste Beschichtung 14 während der Gasphasenabscheidung ausgespart, z. B. durch Abkleben oder dergleichen. Dadurch liegt hier keine Farbschicht 400 vor. Der Buchstabe 300 ist somit als scharf abgegrenzte Grafik deutlich erkennbar.

### Bezugszeichenliste

- 1: Haushaltgerätebaueinrichtung
- 2: Substrat
- 3: Gargerät
- 11: Bauteil
- 12: Oberflächenbereich
- 13: Garraum
- 14: Beschichtung
- 21: Wandung
- 22: Material
- 23: Tür
- 24: Beschichtung
- 31: Gargutträgeraufnahme
- 33: Bedieneinrichtung
- 41: Gehäuse
- 120: Oberflächenbereich
- 140: Haftvermittler
- 141: Schichtdicke
- 142: Hilfsstoff
- 240: Emailbeschichtung
- 241: Schichtdicke
- 242: Hilfsstoff
- 300: Buchstabe
- 400: Farbschicht

## Patentansprüche

1. Haushaltgerätebaueinrichtung (1), insbesondere für ein Gargerät (3), umfassend wenigstens ein Substrat (2) mit wenigstens einem wenigstens teilweise beschichteten Oberflächenbereich (12), der wenigstens eine erste im Wesentlichen gasdiffusionsdichte und im Wesentlichen transparente Beschichtung (14) und wenigstens eine wenigstens bereichsweise über der ersten Beschichtung liegende zweite Beschichtung (24) aufweist,
**dadurch gekennzeichnet, dass** die zweite Beschichtung (24) wenigstens teilweise eine Email- und/oder emailartige Beschichtung (240) ist.

2. Haushaltgerätebaueinrichtung (1) nach einem der vorhergehenden Ansprüche, **dadurch gekennzeichnet, dass** die erste Beschichtung (14) durch ein Beschichtungsverfahren aufgetragen ist, welches wenigstens eine Gasphasenabscheidung als Verfahrensschritt aufweist.

3. Haushaltgerätebaueinrichtung (1) nach einem der vorhergehenden Ansprüche, **dadurch gekennzeichnet, dass** die erste Beschichtung (14) wenigstens bereichsweise eine Schichtdicke (141) zwischen einem Nanometer und 10000 Nanometer aufweist.

4. Haushaltgerätebaueinrichtung (1) nach einem der vorhergehenden Ansprüche, **dadurch gekennzeichnet, dass** die zweite Beschichtung (24) im Wesentlichen transparent und/oder im Wesentlichen farblos ist.

5. Haushaltgerätebaueinrichtung (1) nach einem der vorhergehenden Ansprüche, **dadurch gekennzeichnet, dass** die erste Beschichtung (14) und/oder die zweite Beschichtung (24) wenigstens eine im Wesentlichen anorganische Verbindung und insbesondere wenigstens eine Siliziumverbindung enthält.

6. Haushaltgerätebaueinrichtung (1) nach einem der vorhergehenden Ansprüche, **dadurch gekennzeichnet, dass** das Substrat (2) wenigstens teilweise aus wenigstens einem metallischen Material (22) besteht.

## Claims

1. Household appliance construction device (1), in particular for a cooking appliance (3), comprising at least one substrate (2) having at least one at least partially coated surface region (12), which has at least one first, substantially gas diffusion-tight and substantially transparent coating (14) and at least one second coating (24) located above the first coating at least in regions,
**characterised in that** the second coating (24) is at least in part an enamel and/or enamellar coating (240).

2. Household appliance construction device (1) according to claim 1, **characterised in that** the first coating (14) is applied by a coating method which has at least chemical vapour deposition as a method step.

3. Household appliance construction device (1) according to either of the preceding claims, **characterised in that** the first coating (14) has, at least in regions, a layer thickness (141) between one nanometre and 10,000 nanometres.

4. Household appliance construction device (1) according to any of the preceding claims, **characterised in that** the second coating (24) is substantially transparent and/or substantially colourless.

5. Household appliance construction device (1) according to any of the preceding claims, **characterised in that** the first coating (14) and/or the second coating (24) contains at least one substantially inorganic compound and in particular at least one silicon compound.

6. Household appliance construction device (1) according to any of the preceding claims, **characterised in that** the substrate (2) consists at least in part of at least one metal material (22).

## Revendications

1. Dispositif de construction d'appareils ménagers (1), en particulier destiné à un appareil de cuisson (3), comprenant au moins un substrat (2) comportant au moins une zone de surface au moins partiellement revêtue (12) qui présente au moins un premier revêtement (14) sensiblement étanche à la diffusion de gaz et sensiblement transparent et au moins un second revêtement (24) situé, au moins dans certaines zones, au-dessus du premier revêtement,
**caractérisé en ce que** le second revêtement (24) est au moins partiellement un revêtement en émail et/ou de type émail (240).

2. Dispositif de construction d'appareils ménagers (1) selon revendication 1, **caractérisé en ce que** le premier revêtement (14) est appliqué par un procédé de revêtement qui présente au moins un dépôt en phase gazeuse comme étape de procédé.

3. Dispositif de construction d'appareils ménagers (1) selon l'une des revendications précédentes, **caractérisé en ce que** le premier revêtement (14) présente, au moins dans certaines zones, une épaisseur de revêtement (141) comprise entre un nanomètre et 10 000 nanomètres.

4. Dispositif de construction d'appareils ménagers (1) selon l'une des revendications précédentes, **caractérisé en ce que** le second revêtement (24) est sensiblement transparent et/ou sensiblement incolore.

5. Dispositif de construction d'appareils ménagers (1) selon l'une des revendications précédentes, **caractérisé en ce que** le premier revêtement (14) et/ou le second revêtement (24) contiennent au moins un composé sensiblement inorganique et en particulier au moins un composé de silicium.

6. Dispositif de construction d'appareils ménagers (1) selon l'une des revendications précédentes, **caractérisé en ce que** le substrat (2) est constitué au moins partiellement d'au moins un matériau métallique (22).
